# EUROPÄISCHE PATENTSCHRIFT

(11) **EP 3 430 364 B1**
(45) Veröffentlichungstag und Bekanntmachung des Hinweises auf die Patenterteilung: **09.12.2020**
(21) Anmeldenummer: 17711624.1
(22) Anmeldetag: 15.03.2017
(51) Int. Cl.: G01L 1/20, G01L 1/22

(54) **FASERVERSTÄRKTER VERBUNDWERKSTOFF MIT EINER SENSORANORDNUNG ZUR STRUKTURÜBERWACHUNG DES VERBUNDWERKSTOFFS**
FIBER-REINFORCED COMPOSITE MATERIAL WITH A SENSOR ASSEMBLY FOR MONITORING THE STRUCTURE OF THE COMPOSITE MATERIAL
MATÉRIAU COMPOSITE RENFORCÉ PAR DES FIBRES COMPRENANT UN ENSEMBLE DE DÉTECTION POUR LE CONTRÔLE DE LA STRUCTURE DU MATÉRIAU COMPOSITE

(30) Priorität: 15.03.2016 DE 102016104725
(43) Veröffentlichungstag der Anmeldung: 23.01.2019
(73) Patentinhaber: Technische Hochschule Köln, 50968 Köln (DE)
(72) Erfinder: BONGARDS, Michael, 58566 Kierspe (DE); KÖHN, Hartmut, 51643 Gummersbach (DE)
(74) Vertreter: Michalski Hüttermann & Partner Patentanwälte mbB
(86) Internationale Anmeldenummer: PCT/EP2017/056109
(87) Internationale Veröffentlichungsnummer: WO 2017/158013

(56) Entgegenhaltungen:
- EP-A2- 0 071 269
- WO-A1-99/53283
- WO-A2-2010/101633
- WO-A2-2015/073944
- DE-A1-102008 058 882

## Beschreibung

Die Erfindung betrifft einen faserverstärkter Verbundwerkstoff mit einer Sensoranordnung aus einer Mehrzahl von Sensoren zur Strukturüberwachung des Verbundwerkstoffs, wobei elektrische Leiterbahnen in den Verbundwerkstoff eingearbeitet sind und durch den Verbundwerkstoff hindurch verlaufen, die elektrischen Leiterbahnen in einer ersten Gruppe und in einer zweiten, von der ersten Gruppe verschiedene Gruppe angeordnet sind, wobei die elektrischen Leiterbahnen der ersten Gruppe in einer ersten Richtung verlaufen, die elektrischen Leiterbahnen der zweiten Gruppe in einer zweiten Richtung verlaufen und die elektrischen Leiterbahnen der ersten Gruppe schneiden und somit zusammen mit den Leiterbahnen der ersten Gruppe ein Netz aus n Zeilenleitern und m Spaltenleiter bilden, und ein Signalverarbeitungsmittel zur Überwachung wenigstens einer elektrischen Eigenschaft der Leiterbahnen vorgesehen ist.

Aufgrund ihrer guten mechanischen Eigenschaften werden faserverstärkten Verbundwerkstoffe für Strukturen in verschiedenen Industriebereichen wie z.B. in der Luftfahrt, in der Windenergie, im Automobilbau und im Maschinen- und Anlagenbau eingesetzt, wobei ihre Verwendung in den vergangenen Jahren stark zugenommen hat. In diesen Bereichen sind faserverstärkte Verbundwerkstoffe häufig hohen Belastungen ausgesetzt. Um Schäden frühzeitig zu erkennen und die wirtschaftlichen Folgen im Fall von Schäden gering zu halten, ist es notwendig, eine geeignete Sensorik einzusetzen, da Schädigungen bei Bauteilen aus Verbundwerkstoffen äußerlich meist nicht sichtbar sind. Verfahren aus der Materialprüfung zur zerstörungsfreien Prüfung von Bauteilen, wie Ultraschall, Röntgen und Thermografie, stoßen bei der Beurteilung von Schädigungen dabei schnell an ihre Grenzen. Ein weiterer Nachteil dieser Verfahren ist, dass sie nicht während des Betriebs durchgeführt werden können oder teure Prüfgeräte und aufwendige Prüfverfahren bedürfen. Daher besteht ein hoher Bedarf an Systemen zur integrierten Strukturüberwachung (engl.: Structural Health Monitoring, SHM), die kontinuierliche oder periodische und automatisierte Methoden zur Bestimmung und Überwachung des Zustandes eines Überwachungsobjektes bereitstellen.

Für die Überwachung sind permanent in der Struktur verbleibende Sensoren vorteilhaft. Ein solches SHM-System besteht daher z.B. aus einem Netzwerk von permanent applizierten Sensoren sowie aus Komponenten zur Signalverarbeitung und -analyse. Auf diese Weise lassen sich Strukturen im Betrieb kontinuierlich auf Schädigungsereignisse überprüfen, damit Schäden frühzeitig erkannt und lokalisiert werden können. Aufgrund der Kenntnisse über den Zustand der Struktur können Präventivmaßnahmen durchgeführt werden, um die Lebensdauer der Struktur zu verlängern und ein katastrophales Versagen zu verhindern. Stillstand infolge von Reparatur- oder Wartungsarbeiten ist wirtschaftlich unrentabel und kann dadurch vermieden werden.

Aus dem Stand der Technik sind mechanische und faseroptische Dehnungsmessstreifen zur Erfassung von dehnenden und stauchenden Verformungen der Struktur faserverstärkter Verbundwerkstoff bekannt. Diese besitzen jedoch den Nachteil, dass zwar Verformungen erfasst werden können, aber Brüche von Fasern der Verbundwerkstoffe unter Umständen nicht erkannt werden.

Hierfür sind aus dem Stand der Technik weitere Verfahren bekannt, bei denen Dehnungssensoren durch elektrische Leiter ersetzt und in den faserverstärkten Verbundwerkstoff eingearbeitet werden. Veränderungen in den elektrischen Eigenschaften der Leiter sowie Brüche der Leiter lassen dabei auf eine Schädigung des zu überwachenden Verbundwerkstoffs schließen.

Aus der WO 2005/024371 A1 ist ein Sensor zur Überwachung einer Struktur bekannt, wobei der Sensor ein Netzwerk von miteinander verbundenen elektrischen Leitungen aufweist und Änderungen der elektrischen Eigenschaft der Leitungen gemessen werden. Eine Änderung der vorbestimmten physikalischen Eigenschaft der Struktur hat eine Änderung der elektrischen Eigenschaft der Leitungen zur Folge, wodurch Schädigungen der Struktur identifizieren und lokalisieren werden können.

Aus der WO 2010/004324 A1 ist außerdem eine Anordnung für die Zustandsüberwachung von faserverstärkten Verbundwerkstoffen bekannt, wobei elektrisch leitenden Fasern in den Verbundwerkstoff eingearbeitet sind und elektrische Pfade definieren. Ein Detektor erfasst dabei Änderungen der elektrischen Eigenschaft der Pfade. Die Gitterknoten des aus den elektrischen Pfaden gebildeten Netzwerks können dabei geschlossen, also elektrisch miteinander verbunden, oder offen sein. Zur Detektion eines Schadensereignisses werden die elektrischen Eigenschaften oder die elektrische Kontinuität der Pfade überwacht.

Die WO2010/101633 A2 beschreibt Kraft- oder Druckwandleranordnungen welche elastisch dehnbare elektrisch leitfähige Polymerfäden innehaben, die in parallelen Reihen und Spalten angeordnet sind, die an Kreuzungspunkten ein piezoresistives Material kontaktieren, das einen elektrischen Widerstand aufweist, der sich mit dem Druck oder umgekehrt ändert darauf ausgeübte Kraft, um eine Matrixanordnung aus Kraft- oder Drucksensorelementen zu bilden.

Die WO 99/53283 A1 betrifft eine Vorrichtung zum Abfragen mehrerer Sensoren in einer Matrixverbindung, wobei die Matrixverbindung n Leitungsleiter und m Spaltenleiter aufweist. Das Gerät enthält (n + m) Steuereinrichtungen, die mit den n Leitungsleitern und m Säulenleitern verbunden werden können. Jedes Steuergerät kann einzeln geschaltet werden, so dass es in einem ersten Modus als Treiberzelle arbeiten kann, wodurch eine elektrische Treiberspannung auf den anzuschließenden Leitungs- oder Spaltenleiter auftreffen kann, und in einem zweiten Modus als Messwandler in arbeiten kann, um das Signal auf den Spalten- oder Leitungsleitern, die angeschlossen werden sollen, zu verarbeiten.

DE10 2008 058882 A1 beschreibt eine Struktur welche eine Matrix aus Kunststoff hat, die Verstärkungsfasern und Sensorfasern umgibt, die derart in die Matrix eingebettet sind, dass die Sensorfasern zusammen mit den Verstärkungsfasern als tragende Elemente in einer Gruppe von mehreren Schichten wirken . Die Sensorfasern weisen eine definierte elektrische Leitfähigkeit auf, die sich bei Variation der Länge der Sensorfasern ändert.

WO 2015/073944 A2 beschreibt ein gedruckten dehnbaren Dehnungssensor, welcher einen nahtlosen elastomeren Körper und eine in den nahtlosen elastomeren Körper eingebettete spannungsempfindliche leitfähige Struktur umfasst. Die spannungsempfindliche leitfähige Struktur umfasst ein oder mehrere leitende Filamente, die in einem kontinuierlichen Muster angeordnet sind. Ein Verfahren zum Drucken eines dehnbaren Dehnungssensors umfasst das Abscheiden eines oder mehrerer leitfähiger Filamente in einem vorbestimmten kontinuierlichen Muster in oder auf einer Trägermatrix. Nach dem Abscheiden wird die Trägermatrix gehärtet, um eine spannungsempfindliche leitfähige Struktur in einen nahtlosen elastomeren Körper einzubetten.

Nachteilig bei einem geschlossenen Netzwerk ist, dass Messungen der elektrischen Eigenschaften des Netzwerks, beispielsweise des Widerstandes, zur Detektion eines Schadensereignisses mit Referenztabellen aus Referenzmessungen verglichen werden müssen. Nachteilig bei einem offenen Netzwerk ist andererseits, dass für die Überwachung der Kontinuität der Leiter beide Enden kontaktiert werden müssen. Will man mehrere derartige Sensorelemente selektiv auswerten, muss an jedes einzelne dieser Sensorelemente eine Testspannung angelegt werden und der über die einzelnen Sensorelemente abfließende Strom selektiv gemessen werden. Bei n Zeilenleitern und m Spaltenleitern sind daher 2 (n + m) Leitungen notwendig.

Ein weiterer Nachteil besteht da drin, dass bei einem gebrochen Leiter auf Grund von Belastungen des Verbundwerkstoffs dieser Leiterweg nicht mehr für die weitere Detektion von Schäden zur Verfügung steht, wodurch weitere Schädigungen entlang dieses Leiterweges nicht mehr erkannt werden können. Des Weiteren hat die Einbettung der zuvor beschriebenen Sensoren wesentliche Auswirkungen auf die mechanischen Eigenschaften und die Integrität des zu überwachenden Faserverbundwerkstoffs, da die äußeren Anschlüsse zur Kontaktierung und Auslese durch den Faserverbundwerkstoff hindurch nach Außen geführt werden müssen.

Der Erfindung liegt die Aufgabe zugrunde, einen faserverstärkter Verbundwerkstoff mit einer Sensoranordnung aus einer Mehrzahl von Sensoren zur Strukturüberwachung des Verbundwerkstoffs bereitzustellen, wobei ortsaufgelöst der Zustand des Verbundwerkstoffs sowie Schädigungen etwa durch Faserrisse erfasst werden können.

Die Lösung der Aufgabe erfolgt durch die Gegenstände der unabhängigen Ansprüche. Vorteilhafte Ausgestaltungen der Erfindung sind in den Unteransprüchen angegeben.

Bei einem faserverstärkter Verbundwerkstoff mit einer Sensoranordnung aus einer Mehrzahl von Sensoren zur Strukturüberwachung des Verbundwerkstoffs der eingangs beschriebenen Art wird die Aufgabe erfindungsgemäß somit dadurch gelöst, dass in jedem Kreuzungsbereich einer elektrischen Leiterbahn der ersten Gruppe mit einer elektrischen Leiterbahn der zweiten Gruppe eine Diode angeordnet ist, wobei mittels der Diode die Verbindung zwischen Zeilenleiter und Spaltenleiter hergestellt ist, so dass ein Netzwerk in Form einer Dioden-Matrix gebildet ist.

Die einzelnen Dioden werden erfindungsgemäß also in einer Matrix-Verschaltung betrieben, wodurch die Anzahl der äußeren elektrischen Anschlüsse reduziert ist. Außerdem kann auf diese Weise auch sichergestellt werden, dass auch bei Schädigungen des Verbundwerkstoffs die Zuverlässigkeit der Strukturüberwachung nicht vermindert wird. Zu erwähnen ist, dass die Matrix-Verschaltung hier nur als schaltungstechnische Anordnung zu verstehen ist. Es ist nicht erforderlich, dass Zeilen- und Spaltenleiter in einer regelmäßigen Gitterverteilung angeordnet sind. Auch müssen sie nicht geradlinig und parallel bzw. senkrecht zueinander verlaufen. Vielmehr kann die Dioden-Matrix der Form und den Gegebenheiten der zu überwachenden Struktur des faserverstärkten Verbundwerkstoffs angepasst werden.

Die oben erwähnte Dioden-Matrix wird in der Elektrotechnik auch als Passivmatrix bezeichnet, deren Beschaltung durch eine Vielzahl von zur Verfügung stehenden integrierten Bausteinen erfolgen kann. In einer Matrix-Konfiguration kann jeder Kreuzungspunkt der Matrix durch Aktivierung eines entsprechenden Spaltentreibers in Verbindung mit der Aktivierung eines entsprechenden Zeilentreibers einzeln angesteuert werden. Daher wird in einer bevorzugten Ausführungsform jeder Kreuzungsbereich durch das Signalverarbeitungsmittel mittels Zeilen- und Spaltentreiber angesteuert. Die Aufgabe der Zeilen- und Spaltentreiber besteht in der zyklischen Ansteuerung der Elektroden der Dioden mit unterschiedlichen Spannungen unterschiedlicher Polarität.

In einer weiteren bevorzugten Ausführungsform sind die Zeilen- und Spaltentreiber als Schieberegister ausgebildet. Schieberegister gehören zu den Logikbausteinen und ermöglichen die parallele Ausgabe eines seriellen Datenstroms. Ein sich daraus ergebender Vorteil ist, dass Mikrocontroller mit deutlich weniger Ein-/Ausgängen verwendet werden können als Zeilen und Spalten vorhanden sind.

Das Signalverarbeitungsmittel ist in einer bevorzugten Ausführungsform als anwendungsspezifische integrierte Schaltung ausgebildet. In einer weiteren bevorzugten Ausführungsform weisen die Zeilen- und Spaltenleiter und/oder die zwischen Zeilenleiter und Spaltenleiter geschaltete Dioden eine ähnliche Bruchdehnung wie der zu überwachende Verbundwerkstoff auf. Vorteilhaft dabei ist, wenn die Bruchdehnung der Zeilenleiter und Spaltenleiter und/oder der Dioden gleich oder kleiner ist als die Bruchdehnung des faserverstärkten Verbundwerkstoffs. Wird der Verbundwerkstoff derart belastet, dass Faserbrüche in ihm auftreten, brechen auch die Zeilenleiter und Spaltenleiter und/oder die Dioden. Der elektrische Stromfluss über diesen Leiterweg wird unterbrochen, wodurch der Schaden erkennbar wird. Schäden können somit frühzeitig erkannt werden, wobei die Zeilenleiter und die Spaltenleiter und/oder die Dioden entweder gleichzeitig zusammen mit den Fasern des Verbundwerkstoffs brechen oder früher, wodurch unentdeckte Faserbrüche vermieden werden.

In einer Ausgestaltung, die nicht unter die beanspruchte Erfindung fällt, kann das Netzwerk in Form einer Dioden-Matrix ohne eigene mechanische Stabilisierungsmittel innerhalb des faserverstärkten Verbundwerkstoffs angeordnet sein. Der Einbau der Dioden-Matrix erfolgt also in dieser Ausgestaltung durch Einlaminieren der einzelnen Leiter in den Schichtaufbau des faserverstärkten Verbundwerkstoffes. So ist es zum Beispiel möglich, die Dioden-Matrix gemeinsam zwischen zwei Fasermatten des Verbundwerkstoffes einzubringen. Diese Ausführungsform hat den Vorteil, dass das Schichtgefüge des Verbundwerkstoffes möglichst wenig gestört wird und die Leiter einen möglichst innigen Kontakt zu den einzelnen Lagen des Verbundwerkstoffes aufweisen. Auf diese Art und Weise lässt sich die mechanische Sensitivität der Dioden-Matrix erhöhen und der Verbundwerkstoff wird nicht durch eine zusätzliche Schicht in seinen mechanischen Eigenschaften gestört/geschwächt. Zudem ermöglicht diese Ausführungsform, dass die Dioden-Matrix möglichst genau an die Konturen des Verbundwerkstoffes angepasst werden kann.

Erfindungsgemäß ist das Netzwerk in Form einer Dioden-Matrix mittels einer eigenen Trägerschicht, wobei die Trägerschicht eine Folie ist, innerhalb des faserverstärkten Verbundwerkstoffs angeordnet sein. Unter einer eigenen Trägerschicht dieser Ausgestaltung lassen sich insbesondere sämtliche Arten von Folien fassen, welche nicht zum Aufbau des Verbundwerkstoffes nötig sind. So lässt sich beispielsweise die Dioden-Matrix auf eine dünne Folie aufziehen und anschließend die auf die Folie aufgezogene Dioden-Matrix als eigene Schicht in den Verbundwerkstoff einbringen. Diese Ausführungsform kann zu einer schnelleren Herstellung führen, da die Dioden-Matrix schon auf der separaten Schicht vorgefertigt werden kann. Auch ist in dieser Ausführungsform eine möglichst genaue Positionierung der Leiterbahnen möglich, so dass ein weiteres Positionieren am Bauteil entfällt. Insbesondere lassen sich so auch komplex aufgebaute Bauteile, wie zum Beispiel Teile von Flugzeug-Fahrwerken, mit exakt positionierten Dioden-Matrizen ausrüsten.

In einer weiteren Ausgestaltung kann die Ausrichtung entweder der Zeilenleiter oder der Spaltenleiter im Wesentlichen parallel zur Faserrichtung des faserverstärkten Verbundwerkstoffes erfolgen. Es kann insbesondere bevorzugt sein die Ausrichtung der Leiterbahnen so vorzunehmen, dass diese mit der Symmetrie des Verbundwerkstoffes, d.h. mit der Ausrichtung der Fasern, übereinstimmt. Auf diese Art ist gewährleistet, dass mindestens eine Ausrichtung der Leiterbahnen parallel zur Faserrichtung erfolgt und insofern die Leiterbahnen die Hauptkomponenten (parallel und senkrecht zur mechanischen Vorzugsrichtung des Verbundwerkstoffes) der auf den Verbundwerkstoff wirkenden Kräfte abbilden. Diese Ausgestaltung kann dazu beitragen, ein verlässlicheres Bild der auf den Verbundwerkstoff wirkenden Kräfte anzugeben.

Weiterhin kann in einer bevorzugten Ausführungsform der Abstand zwischen den Zeilenleitern oder der Abstand zwischen den Spaltenleitern oder der Abstand sowohl zwischen den Zeilen- als auch zwischen den Spaltenleitern über den Verbundwerkstoff hinweg variieren. Als Funktion der Symmetrie des Bauteils und als Funktion der Symmetrie der zu erwartenden Kräfte kann es sinnvoll sein, dass die Abstände zwischen den einzelnen Leitern nicht konstant sind, sondern als Funktion oben genannter Einflussgrößen variiert werden. So lassen sich beispielsweise Flächen oder Volumina mit hoher mechanischer Belastung mit einem geringeren Abstand zwischen den Leitern überwachen, während mechanisch weniger exponierte Flächen eine geringere Dichte an Leitern aufweisen können. Auf diese Art und Weise kann die Dioden-Matrix verlässlichere mechanische Aussagen abbilden. Die Variationen des Abstandes müssen dabei auf jeden Fall größer sein als die Fertigungstoleranzen der Abstände der Dioden-Matrix. Dies kann dann angenommen werden, wenn der Abstand zweier benachbarter Zeilen- oder Spaltenleiter um mehr als 10% abweicht.

Innerhalb eines weiteren erfindungsgemäßen Aspektes können im faserverstärkten Verbundwerkstoff mindestens zwei unabhängige, parallel zueinander angeordnete Dioden-Matrizen angeordnet sein. Um die Kräfte verlässlich abzubilden, welche auf ein komplexes dreidimensionales Bauteil wirken, kann es sinnvoll sein, mehrere unabhängige Dioden-Matrizen in den Verbundwerkstoff einzubringen. Dies kann beispielsweise dadurch erfolgen, dass unabhängige Dioden-Matrizen zwischen unterschiedliche Schichten des Verbundwerkstoffes einlaminiert werden. Dabei ergeben sich elektrisch unabhängige Netzwerke, deren Flächen parallel zueinander angeordnet sind. Auf diese Art und Weise lassen sich definiert die unterschiedlichen mechanischen Belastungen in der Tiefe des Bauteils erfassen. Zudem ergibt sich auch eine Redundanz, da selbst bei Ausfall einer kompletten Dioden-Matrix, weitere Informationen aus den verbleibenden Dioden-Matrizes abgerufen werden können.

Innerhalb einer weiteren, bevorzugten Ausgestaltung kann das Netzwerk in Form einer Dioden-Matrix innerhalb des faserverstärkten Verbundwerkstoffs ein drei-dimensionales Netzwerk ausbilden. Durch diese Ausgestaltung ist es möglich, die mechanische Belastung eines dreidimensionalen Verbundwerkstoffes möglichst genau abzubilden. Es werden an dieser Stelle also nicht nur Informationen aus einer Schicht, sondern auch Informationen aus der Tiefe des Bauteils erhalten. Die Ausbildung des dreidimensionalen Netzwerkes kann dabei durch besondere elektrische Kontakte oder Kontaktstellen der einzelnen Dioden-Matrizen erfolgen, welche in der Lage sind die einzelnen Schichten des Verbundwerkstoffes zu durchstoßen und eine elektrische Verbindung zwischen den einzelnen Dioden-Matrizes herzustellen. Auf diese Art kann ein elektrisches dreidimensionales Netzwerk ausgebildet werden.

In einer bevorzugten Ausführungsform weist die Erfindung auch ein Verfahren zur Überwachung der Struktur eines zuvor beschriebenen faserverstärkten Verbundwerkstoffs mit folgenden Schritten auf:
- Beaufschlagen der Dioden-Matrix mittels des Signalverarbeitungsmittels über die elektrischen Leiterbahnen einer ersten Gruppe und den elektrischen Leiterbahnen einer zweiten Gruppe mit einer Spannung in der Form, dass die im Kreuzungsbereich der elektrischen Leiterbahnen einer ersten Gruppe und der elektrischen Leiterbahnen einer zweiten Gruppe geschalteten Dioden der Dioden-Matrix in Sperrrichtung betrieben werden,
- Umkehren der Polarität der Spannung für eine elektrische Leiterbahn einer ersten Gruppe und einer elektrischen Leiterbahnen einer zweiten Gruppe, wodurch die im Kreuzungsbereich der elektrischen Leiterbahn einer ersten Gruppe und einer elektrischen Leiterbahnen einer zweiten Gruppe geschaltete Diode in Durchlassrichtung betrieben wird,
- Messen des Stromflusses mittels des Signalverarbeitungsmittels über die elektrische Leiterbahn einer ersten Gruppe der im Kreuzungspunkt in Durchlassrichtung geschalteten Diode und der elektrischen Leiterbahnen einer zweiten Gruppe,
- Erfassen eines Schadens im Bereich des Leiterweges auf Grund einer Unterbrechung des Stromflusses durch eine defekte Leiterbahn und/oder Diode und
- Wiederholen der vorherigen Schritte, wobei bei einer erneuten Messung des Stromflusses mittels des Signalverarbeitungsmittels die elektrische Leiterbahn der ersten und/oder zweiten Gruppe von der vorherigen Messung verschieden ist.

Zur Durchgangsprüfung eines Leiterwegs über die Zeilenleiter und Spaltenleiter der Dioden-Matrix wird diese somit derart beaufschlagt, dass die Dioden in Sperrrichtung betrieben werden, während die Dioden-Matrix zur Überprüfung der Intaktheit eines speziellen Leiterweges und damit der Intaktheit des Verbundstoffes für jeweils eine Zeile und eine Spalte in umgekehrter Richtung beaufschlagt wird, d.h. in Durchlassrichtung der Dioden, so dass eine Durchgangsprüfung erfolgen kann. Mit dieser Sensoranordnung zur Strukturüberwachung kann eine Dioden-Matrix mit bis zu n mal m Kreuzungspunkten abgefragt werden, wobei durch das schrittweise Testen der Leiterwege über die Zeilenleiter und Spaltenleiter der Dioden-Matrix ein Defekt genau lokalisiert werden kann.

In einer bevorzugten Ausführungsform des Verfahrens wird der gesamte Stromverbrauch der Sensoranordnung zur Strukturüberwachung des Verbundwerkstoffs gemessen. Da der Stromverbrauch der Elektronik im Vergleich zum Sensor sehr gering ist, kann eine Schädigung des Verbundstoffes und damit der Diode sehr schnell registriert werden. Für die genaue Lokalisierung des Schadens werden dann die Dioden schrittweise getestet.

Nachfolgend wird die Erfindung anhand eines bevorzugten Ausführungsbeispiels der Erfindung unter Bezugnahme auf die Zeichnungen weiter erläutert. In den Zeichnungen zeigen
- Fig. 1: eine schematische Darstellung eines Sensornetzwerks aus dem Stand der Technik und
- Fig. 2: einen Faserverbundstoff mit eingebettetem Sensornetzwerk gemäß einem bevorzugten Ausführungsbeispiel der Erfindung.

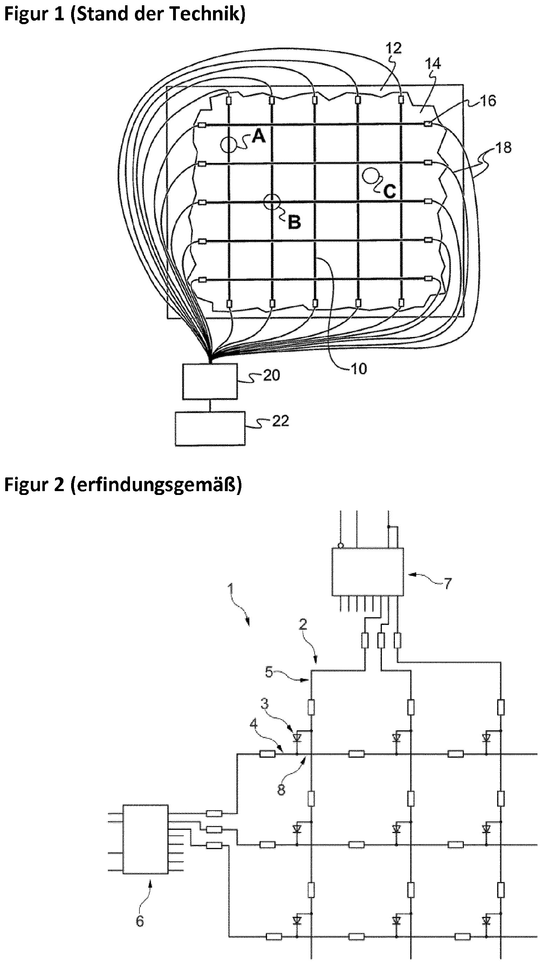

Fig. 1 zeigt ein Beispiel für ein offenes Sensornetzwerk aus dem Stand der Technik, wobei Leiter 10 in Form eines Gitters 14 aus Zeilenleitern und Spaltenleitern in einen faserverstärkter Verbundwerkstoff 12 eingearbeitet sind. Jeder Leiter 10 ist an beiden Leiterenden 16 mit einer Messleitung 18 verbunden, wobei die Messleitungen 18 mit einem Messgerät 20 zur Messung einer physikalischen Eigenschaft der Leiter 10 verbunden sind. Will man mehrere der Leiter 10 selektiv auswerten, muss an jeden einzelnen dieser Leiter 10 eine Testspannung mittels der Messleitungen 18 angelegt werden und der über die einzelnen Leiter 10 abfließende Strom muss selektiv gemessen werden. Bei einem aus n Zeilenleitern und m Spaltenleitern gebildeten Gitter 14 sind daher 2 (n + m) Leitungen notwendig. Nachteilig bei dem aus dem Stand der Technik bekannten Sensornetzwerk ist, dass bei Brüchen der Leiter 18 zwar ein Schaden erkannt wird, weitere Schädigungen am gleichen Leiter an anderer Stelle aber nicht mehr detektiert werden können.

Fig. 2 zeigt einen faserverstärkten Verbundwerkstoff 1 mit einer Sensoranordnung aus einer Mehrzahl von Sensoren zur Strukturüberwachung des Verbundwerkstoffs gemäß einem bevorzugten Ausführungsbeispiel der Erfindung. Die elektrischen Leiter 4, 5 der Sensoranordnung sind in die Faserstruktur des Verbundwerkstoffs 1 integriert, wobei sie ein Netzwerk aus Zeilenleitern 4 und Spaltenleitern 5 bilden. An jeden Kreuzungspunkten 8 ist eine Diode 3 angeordnet, wobei die Diode 3 die Verbindung zwischen Zeilenleiter 4 und Spaltenleiter 5 herstellt, so dass ein Netzwerk in Form einer Dioden-Matrix 2 gebildet ist. Die Zeilenleiter 4 und Spaltenleiter 5 und/oder Dioden 3 weisen dabei die gleiche oder eine geringfügig kleinere Bruchdehnung wie der zu überwachende Verbundwerkstoff 1 auf.

Wird der Verbundwerkstoff 1 derart belastet, dass Faserbrüche in ihm auftreten, brechen auch die Zeilenleiter 4 und Spaltenleiter 5 und/oder Dioden 3. Der elektrische Stromfluss über die Leiter wird unterbrochen. Ein Schaden ist jetzt dadurch erkennbar, dass jede in den Kreuzungspunkten 8 befindliche Diode 3 durch das Signalverarbeitungsmittel mittels Zeilentreiber 6 und Spaltentreiber 7 angesteuert werden kann, wobei die Aufgabe der Zeilentreiber 6 und Spaltentreiber 7 in der zyklischen Ansteuerung der Elektroden der Dioden 3 mit unterschiedlichen Spannungen unterschiedlicher Polarität besteht.

Die Durchgangsprüfung eines Leiterwegs über die Zeilenleiter 4 und Spaltenleiter 5 der Dioden-Matrix 3 erfolgt nun so, dass die Dioden-Matrix derart beaufschlagt wird, dass die Dioden 3 in Sperrrichtung betrieben werden, während zur Überprüfung der Intaktheit eines speziellen Leiterweges und damit der Intaktheit des Verbundstoffes 1 für jeweils eine Zeile und eine Spalte die Dioden-Matrix 2 in umgekehrter Richtung beaufschlagt wird, d.h. die Diode 3 in Durchlassrichtung betrieben wird, so dass eine Durchgangsprüfung über die entsprechenden Zeilenleiter 4 und Spaltenleiter 5 erfolgen kann. Werden nacheinander alle Kreuzungspunkte 8 der Dioden-Matrix für ein spezielles Paar von Zeilenleitern 4 und Spaltenleitern 5 durchgeprüft, kann ein Defekt lokalisiert und auf den Bereich zwischen zwei Kreuzungspunkten eingegrenzt werden.

### Bezugszeichenliste

- 1: Faserverstärkter Verbundwerkstoff
- 2: Dioden-Matrix
- 3: Diode
- 4: Zeilenleiter
- 5: Spaltenleiter
- 6: Zeilentreiber
- 7: Spaltentreiber
- 8: Kreuzungspunkt

## Patentansprüche

1. Faserverstärkter Verbundwerkstoff (1) mit einer Sensoranordnung aus einer Mehrzahl von Sensoren zur Strukturüberwachung des Verbundwerkstoffs, wobei
elektrische Leiterbahnen (4, 5) in den Verbundwerkstoff (1) eingearbeitet sind und durch den Verbundwerkstoff hindurch verlaufen,
die elektrischen Leiterbahnen in einer ersten Gruppe und in einer zweiten, von der ersten Gruppe verschiedene Gruppe angeordnet sind, wobei
die elektrischen Leiterbahnen der ersten Gruppe in eine erste Richtung verlaufen,
die elektrischen Leiterbahnen der zweiten Gruppe in eine von der ersten Richtung verschiedenen Richtung verlaufen und die elektrischen Leiterbahnen der ersten Gruppe schneiden und somit zusammen mit den Leiterbahnen der ersten Gruppe ein Netz aus n Zeilenleitern (4) und m Spaltenleiter (5) bilden,
ein Signalverarbeitungsmittel zur Überwachung wenigstens einer elektrischen Eigenschaft der Leiterbahnen vorgesehen ist, wodurch der strukturellen Zustand des Verbundwerkstoffs (1) bestimmbar ist, **dadurch gekennzeichnet,**
**dass** in jedem Kreuzungsbereich (8) einer elektrischen Leiterbahn der ersten Gruppe mit einer elektrischen Leiterbahn der zweiten Gruppe eine Diode (3) angeordnet ist,
wobei mittels der Diode (3) die Verbindung zwischen Zeilenleiter (4) und Spaltenleiter (5) herstellt ist, so dass ein Netzwerk in Form einer Dioden-Matrix (2) gebildet ist, wobei
das Netzwerk in Form einer Dioden-Matrix (2) mittels einer eigenen Trägerschicht innerhalb des faserverstärkten Verbundwerkstoffs (1) angeordnet ist, wobei die Trägerschicht eine Folie ist.

2. Faserverstärkter Verbundwerkstoff nach Anspruch 1, **dadurch gekennzeichnet, dass** jeder Kreuzungsbereich (8) durch das Signalverarbeitungsmittel mittels Zeilentreiber (6) und Spaltentreiber (7) ansteuerbar ist.

3. Faserverstärkter Verbundwerkstoff nach Anspruch 2, **dadurch gekennzeichnet, dass** die Zeilentreiber (6) und Spaltentreiber (7) als Schieberegister ausgebildet sind.

4. Faserverstärkter Verbundwerkstoff nach allen vorherigen Ansprüchen, **dadurch gekennzeichnet, dass** das Signalverarbeitungsmittel als anwendungsspezifische integrierte Schaltung ausgebildet ist.

5. Faserverstärkter Verbundwerkstoff nach allen vorherigen Ansprüchen, **dadurch gekennzeichnet, dass** die Zeilenleiter (4) und die Spaltenleiter und/oder die zwischen Zeilenleiter (4) und Spaltenleiter (5) geschaltete Diode (3) die gleiche oder einer kleinere Bruchdehnung besitzen als der zu überwachende Verbundwerkstoff.

6. Faserverstärkter Verbundwerkstoff nach allen vorherigen Ansprüchen, **dadurch gekennzeichnet, dass** die Ausrichtung entweder der Zeilenleiter (4) oder der Spaltenleiter (5) im Wesentlichen parallel zur Faserrichtung des faserverstärkten Verbundwerkstoffes (1) erfolgt.

7. Faserverstärkter Verbundwerkstoff nach allen vorherigen Ansprüchen, **dadurch gekennzeichnet, dass** der Abstand zwischen den Zeilenleitern oder der Abstand zwischen den Spaltenleitern oder der Abstand sowohl zwischen den Zeilen- (4) als auch zwischen den Spaltenleitern (5) über die Fläche des faserverstärkten Verbundwerkstoffes (1) hinweg variiert.

8. Faserverstärkter Verbundwerkstoff nach allen vorherigen Ansprüchen, **dadurch gekennzeichnet, dass** im faserverstärkten Verbundwerkstoff (1) mindestens zwei unabhängige, parallel zueinander angeordnete Dioden-Matrizen (2) angeordnet sind.

9. Faserverstärkter Verbundwerkstoff nach allen vorherigen Ansprüchen, **dadurch gekennzeichnet, dass** das Netzwerk in Form einer Dioden-Matrix (2) innerhalb des faserverstärkten Verbundwerkstoffs ein drei-dimensionales Netzwerk ausbildet.

10. Verfahren zur Überwachung der Struktur eines faserverstärkter Verbundwerkstoffs nach den Ansprüchen 1 bis 9 mit folgenden Schritten:
- Beaufschlagung der Dioden-Matrix (2) mittels des Signalverarbeitungsmittels über die elektrischen Leiterbahnen einer ersten Gruppe und den elektrischen Leiterbahnen einer zweiten Gruppe mit einer Spannung in der Form, dass die im Kreuzungsbereich (8) der elektrischen Leiterbahnen einer ersten Gruppe und der elektrischen Leiterbahnen einer zweiten Gruppe geschalteten Dioden (3) der Dioden-Matrix (2) in Sperrrichtung betrieben werden,
- Umkehrung der Polarität der Spannung für eine elektrische Leiterbahn einer ersten Gruppe und einer elektrischen Leiterbahnen einer zweiten Gruppe, wodurch die im Kreuzungsbereich (8) der elektrischen Leiterbahn einer ersten Gruppe und einer elektrischen Leiterbahnen einer zweiten Gruppe geschaltete Diode (3) in Durchlassrichtung betrieben wird,
- Messung des Stromflusses mittels des Signalverarbeitungsmittels über die elektrische Leiterbahn einer ersten Gruppe, der im Kreuzungspunkt (8) in Durchlassrichtung geschalteten Diode (2) und der elektrischen Leiterbahnen einer zweiten Gruppe,
- Erfassen eines Schadens im Bereich des Leiterweges auf Grund einer Unterbrechung des Stromflusses durch eine defekte Leiterbahn oder Diode (2) und
- Wiederholen der vorherigen Schritte, wobei bei einer erneuten Messung des Stromflusses mittels des Signalverarbeitungsmittels die elektrische Leiterbahn der ersten und/oder zweiten Gruppe verschieden ist von der vorherigen Messung.

11. Verfahren nach Anspruch 10, wobei der gesamte Stromverbrauch der Sensoranordnung zur Strukturüberwachung des Verbundwerkstoffs gemessen wird.

## Claims

1. A fiber-reinforced composite material (1), comprising a sensor array composed of a plurality of sensors for monitoring the structure of the composite material,
electrical conductor tracks (4, 5) being incorporated into the composite material (1) and extending through the composite material,
the electrical conductor tracks being arranged in a first group and in a second group different from the first group,
the electrical conductor tracks of the first group extending in a first direction,
the electrical conductor tracks of the second group extending in a direction different from the first direction and intersecting the electrical conductor tracks of the first group, and thus, together with the conductor tracks of the first group, forming a network made of n row conductors (4) and m column conductors (5), and
a signal processing means for monitoring at least one electrical property of the conductor tracks being provided, whereby the structural state of the composite material (1) can be determined, **characterized in that**
a diode (3) is arranged in each intersecting region (8) of an electrical conductor track of the first group with an electrical conductor track of the second group,
the connection between row conductors (4) and column conductors (5) being established by means of the diode (3) so that a network in the form of a diode matrix (2) is formed,
the network being arranged in the form of a diode matrix (2) by means of a dedicated carrier layer within the fiber-reinforced composite material (1), the carrier layer being a film.

2. The fiber-reinforced composite material according to claim 1, **characterized in that** each intersecting region (8) can be activated by the signal processing means by means of row drivers (6) and column drivers (7).

3. The fiber-reinforced composite material according to claim 2, **characterized in that** the row drivers (6) and column drivers (7) are configured as shift registers.

4. The fiber-reinforced composite material according to all preceding claims, **characterized in that** the signal processing means is configured as an application-specific integrated circuit.

5. The fiber-reinforced composite material according to all preceding claims, **characterized in that** the row conductors (4) and the column conductors and/or the diode (3) connected between row conductors (4) and column conductors (5) have the same elongation at break as, or a lower elongation at break than, the composite material to be monitored.

6. The fiber-reinforced composite material according to all preceding claims, **characterized in that** the alignment of either the row conductors (4) or the column conductors (5) is carried out substantially parallel to the fiber direction of the fiber-reinforced composite material (1).

7. The fiber-reinforced composite material according to all preceding claims, **characterized in that** the distance between the row conductors or the distance between the column conductors or the distance between both the row conductors (4) and the column conductors (5) varies across the surface of the fiber-reinforced composite material (1).

8. The fiber-reinforced composite material according to all preceding claims, **characterized in that** at least two independent, mutually parallel diode matrices (2) are arranged in the fiber-reinforced composite material (1).

9. The fiber-reinforced composite material according to all preceding claims, **characterized in that** the network in the form of a diode matrix (2) within the fiber-reinforced composite material forms a three-dimensional network.

10. A method for monitoring the structure of a fiber-reinforced composite material according to claims 1 to 9, comprising the following steps:
- applying a voltage to the diode matrix (2) by means of the signal processing means via the electrical conductor tracks of a first group and the electrical conductor tracks of a second group in the form that the diodes (3) of the diode matrix (2) connected in the intersecting region (8) of the electrical conductor tracks of a first group and of the electrical conductor tracks of a second group are reverse biased;
- reversing the polarity of the voltage for an electrical conductor track of a first group and of an electrical conductor track of a second group, whereby the diode (3) connected in the intersecting region (8) of the electrical conductor track of a first group and of an electrical conductor track of a second group is forward biased;
- measuring the current flow via the electrical conductor track of a first group, of the diode (2) that is forward biased at the intersecting point (8) and of the electrical conductor tracks of a second group by means of the signal processing means;
- detecting damage in the area of the conductor path due to an interruption in the current flow caused by a defective conductor track or diode (2); and
- repeating the preceding steps, wherein during a renewed measurement of the current flow by means of the signal processing means, the electrical conductor track of the first and/or second group is different from the preceding measurement.

11. The method according to claim 10, wherein the overall power consumption of the sensor array for monitoring the structure of the composite material is measured.

## Revendications

1. Matériau composite (1) renforcé de fibres doté d'un ensemble de capteurs composé d'une multiplicité de capteurs pour la surveillance de la structure du matériau composite, dans lequel
des pistes conductrices (4, 5) électriques sont incorporées dans le matériau composite (1) et s'étendent à travers le matériau composite,
les pistes conductrices électriques sont disposées dans un premier groupe et dans un deuxième groupe, différent du premier groupe, où
les pistes conductrices électriques du premier groupe s'étendent dans une première direction,
les pistes conductrices électriques du deuxième groupe s'étendent dans une direction différente de la première direction et les pistes conductrices électriques du premier groupe se croisent et forment ainsi, ensemble avec les pistes conductrices du premier groupe, un réseau constitué de n conducteurs en lignes (4) et de m conducteurs en colonnes (5),
un système de traitement de signal est prévu pour la surveillance d'au moins une propriété électrique des pistes conductrices, ce par quoi l'état structurel du matériau composite (1) peut être déterminé, **caractérisé en ce**
**qu'**une diode (3) est disposée dans chaque zone de croisement (8) d'une piste conductrice électrique du premier groupe avec une piste conductrice électrique du deuxième groupe,
où une connexion entre des conducteurs en lignes (4) et des conducteurs en colonnes (5) est établie au moyen de la diode (3), de sorte qu'un réseau sous forme d'une matrice de diodes (2) est formé, où
le réseau sous la forme d'une matrice de diodes (2) est disposé à l'intérieur du matériau composite (1) renforcé de fibres au moyen d'une couche de support propre, où la couche de support est un film.

2. Matériau composite renforcé de fibres selon la revendication 1, **caractérisé en ce que** chaque zone de croisement (8) peut être activée par le système de traitement de signal au moyen d'activateurs de lignes (6) et d'activateurs de colonnes (7).

3. Matériau composite renforcé de fibres selon la revendication 2, **caractérisé en ce que** les activateurs de lignes (6) et les activateurs de colonnes (7) sont conçus sous forme d'un registre glissant.

4. Matériau composite renforcé de fibres selon toutes les revendications précédentes, **caractérisé en ce que** le système de traitement de signal est conçu sous forme d'une commutation intégrée spécifique à l'application.

5. Matériau composite renforcé de fibres selon toutes les revendications précédentes, **caractérisé en ce que** les conducteurs en lignes (4) et les conducteurs en colonnes, et/ou la diode (3) branchée entre les conducteurs en lignes (4) et les conducteurs en colonnes (5) possèdent une élongation à la rupture identique ou inférieure à celle du matériau composite devant être surveillé.

6. Matériau composite renforcé de fibres selon toutes les revendications précédentes, **caractérisé en ce que** l'orientation, soit des conducteurs en ligne, soit des conducteurs en colonnes (5), a lieu dans l'ensemble parallèle à la direction des fibres du matériau composite (1) renforcé de fibres.

7. Matériau composite renforcé de fibres selon toutes les revendications précédentes, **caractérisé en ce que** la distance entre les conducteurs en lignes, ou la distance entre les conducteurs en colonnes, ou la distance à la fois entre les conducteurs en lignes (4) et entre les conducteurs en colonnes (5), varie sur la surface du matériau composite (1) renforcé de fibres.

8. Matériau composite renforcé de fibres selon toutes les revendications précédentes, **caractérisé en ce qu'**au moins deux matrices de diodes (2) indépendantes sont disposées parallèles l'une à l'autre dans le matériau composite (1) renforcé de fibres.

9. Matériau composite renforcé de fibres selon toutes les revendications précédentes, **caractérisé en ce que** le réseau sous la forme d'une matrice de diodes (2) à l'intérieur du matériau composite renforcé de fibres forme un réseau tridimensionnel.

10. Procédé de surveillance de la structure d'un matériau composite renforcé de fibres selon les revendications 1 à 9 avec les étapes suivantes :
- la soumission de la matrice de diodes (2), au moyen du système de traitement de signal, par le biais des pistes conductrices électriques d'un premier groupe et des pistes conductrices électriques d'un deuxième groupe, à une tension dans la forme telle que des diodes (3) de la matrice de diodes (2) branchées dans la zone de croisement (8) des pistes conductrices électriques d'un premier groupe et des pistes électrices d'un deuxième groupe sont activées en sens inverse,
- l'inversion de la polarité de la tension pour une piste conductrice électrique d'un premier groupe et d'une piste conductrice électrique d'un deuxième groupe, ce par quoi la diode (3) branchée dans la zone de croisement (8) de la piste conductrice électrique d'un premier groupe et d'une piste conductrice électrique d'un deuxième groupe fonctionne en sens direct,
- la mesure du flux de courant, au moyen du système de traitement de signal, par le biais de la piste conductrice électrique d'un premier groupe, de la diode (2) branchée en sens direct dans le point de croisement (8) et des pistes conductrices électriques d'un deuxième groupe,
- la détection d'un endommagement dans la zone du trajet conducteur en raison d'une interruption du flux de courant par une piste conductrice ou une diode (2) défectueuses, et
- la répétition des étapes précédentes, où, lors d'une nouvelle mesure du flux de courant au moyen du système de traitement de signal, la piste conductrice électrique du premier groupe et/ou du deuxième groupe est différente de la mesure précédente.

11. Procédé selon la revendication 10, dans lequel la consommation de courant totale de l'ensemble de capteurs est mesurée pour la surveillance de structure du matériau composite.
